# EUROPEAN PATENT SPECIFICATION

(11) **EP 3 736 479 B1**
(45) Date of publication and mention of the grant of the patent: **14.07.2021**
(21) Application number: 19717958.3
(22) Date of filing: 22.02.2019
(51) Int. Cl.: F16L 27/08, F16L 51/00, F16L 27/12, F16L 51/02

(54) **EXPANSION-COMPENSATING ELEMENT**
DEHNUNGSAUSGLEICHSELEMENT
ÉLÉMENT COMPENSATEUR DE DILATATION

(30) Priority: 12.03.2018 ES 201830243
(43) Date of publication of application: 11.11.2020
(73) Proprietor: ABN Pipe Systems, S.L.U., 15008 La Coruña (ES)
(72) Inventor: VAZQUEZ SANCHEZ, Javier Antonio, 15008 A CORUÑA (ES); ROSA ARIZA, David, 15008 A CORUÑA (ES)
(74) Representative: Clarke Modet & Co.
(86) International application number: PCT/ES2019/070103
(87) International publication number: WO 2019/175448

(56) References cited:
- US-A- 643 802
- US-A- 1 995 042
- US-A- 5 116 085

## Description

### Technical field of the invention

The present invention corresponds to the technical field of pipe networks and specifically to an expansion compensator element for absorbing the expansions thereof.

### Background of the Invention

Pipe networks are subjected to diverse factors that must be taken into account during the design and assembly thereof. One of these factors is the changes in temperature which cause deformations in the length of the pipes either by expansion, or by contraction, being able to affect the joints between pipes and of these with other elements.

These variations in temperature can be created by increases or decreases in the room temperature, or by the temperature itself of the fluid running through the inside thereof.

The existence of uncontrolled expansion in the conduits due to high temperatures causes destructive effects therein, while contraction due to exposure to low temperatures causes residual tensions in said conduits. These tensions are seen when disassembling a conduit element, whether it is a conduit portion or equipment, the task is difficult and the disconnection with respect to the conduit to which it is joined produces abrupt misalignments with respect to it, due to jamming caused by the tensions in the elements.

Therefore, it is necessary to take this factor into account in the designs for duct networks and take actions to prevent it.

To do so, the design of the line is reformulated either by modifying the layout thereof, if possible, or by artificially providing it with greater elasticity.

In the state of the art, one of the ways used to provide elasticity to the conduits is with the introduction of changes in direction into the layout, especially by means of expansion bends which represent breaks in the layout in omega, L, U or Z-shapes. The bends are based on having a series of fixed and mobile anchors such that they enable the conduit to expand from the effects of the temperature enough to prevent excessive tensions from arising.

These expansion bends are elements which enable relative movements between the ends thereof without entering into plastic deformations, but they have a fundamental problem due to the fact that they occupy too much space and this can result in a drawback in some sections or areas of the network in which an expansion element needs to be placed and there is not enough space.

In the state of the art there are other elements which contribute elasticity to the conduits, resolving the space problem of the bends. These are expansion compensators, also known as expansion joints, which are high-tech elements, mainly made up of flexible bellows, in order to absorb movements in a pipe system.

Nevertheless, these elements which efficiently absorb the deformations tend to act in a maximum expansion range of 2 to 3 cm, and in the case of those elements made with a rubber/elastomer, in a maximum expansion range of 5 to 8 cm, for which reason they can be favourable for metal conduit elements, but not for the case of plastic conduit elements, given that the plastics have much higher thermal expansion coefficients than that of metals and specifically, expansion ranges which these parts are not able to absorb.

An expansion compensator element which has a sufficient expansion magnitude so that the use thereof is suitable in both plastic and metal conduit elements has not been found in the state of the art.

Such an expansion compensator element is known from US 1 995 042 A.

### Description of the invention

The expansion compensator element for pipe elements, presented herein, comprises identical first and second stub ends, which have a tubular body with first and second opposite ends and a ring-shaped area emerging from the first end with first through holes, wherein both first and second stub ends are symmetrically arranged with the second end of both of them facing each other.

This expansion compensator element has a tubular jacket arranged on the outer surface of at least one portion of the tubular bodies of both first and second stub ends, the inner diameter of the tubular jacket being such that the tubular bodies can fit tightly therein while the longitudinal movement of both stub ends with respect to the tubular jacket is enabled.

Likewise, it comprises guide means for the longitudinal movement of each first and second stub ends respectively, which have for each one of them a guide flange located on the tubular jacket on one end thereof, with second through holes, and a set of shafts parallel to the shaft of both stub ends, each arranged through one of the second through holes, with a first free end and a second end fixed to the ring-shaped area of the stub end.

This expansion compensator element is intended to work both as an expansion compensator and a contraction compensator.

When it acts as an expansion compensator, the circuit is intended for a network of fluid at high temperatures. The pipe which has an initial length is assembled at room temperature and the compensator is assembled completely extended, thus, when the tube starts operating with the fluid at high temperatures, the heat causes the increase in the length of the pipe and the compensator closes in order to absorb the increase in length.

Moreover, when it acts as a contraction compensator, the circuit is intended for a network of fluid at low temperatures. In this case, the pipe with the initial length thereof is assembled at room temperature, and the compensator is assembled completely closed such that when the conduit starts operating with the cold liquid, the drop in temperature causes a contraction of the conduit and the compensator opens in order to enable this contraction without causing tensions in the conduit.

A significant improvement of the state of the art is obtained with the expansion compensator element proposed herein.

Thus an expansion compensator element is achieved which is able to absorb significant variations in length of the pipes, with an expansion that can reach a permitted maximum expansion, in a range between 25 and 30 cm, this therefore being suitable both for metal conduits and plastic conduits, and especially for the latter, which have a higher expansion.

These expansion compensator elements make it possible to substitute the expansion bends, therefore achieving an absorption of the expansions and contractions of the conduits, by means of an element which occupies very little space, as opposed to the case with the bends, for which reason these elements can be placed in any conduit network, without dimensional limitations.

Another significant advantage is that this expansion compensator element makes it possible to orient the drill holes of each of the flanges as necessary, thus being able to correct deviations in orientation. Thus, when a stub end or a flange-stub end is welded to a pipe, it is welded to a portion of the pipe by placing the drill holes of the screws in a certain position, but it is very probable for the operator to get confused during the installation and place them in a different position, for which reason when the valve is going to be placed, it is crooked, but due to this expansion compensator element it is possible to correct said deviations in orientation.

Furthermore, this expansion compensator element has an additional function being able to act as an assembly and disassembly fitting. Thus, thanks to locking means for the shafts of the guide means for the second stub end, the side corresponding to this second stub end is fixed and cannot move unless the shafts are unlocked, while the opposite side wherein the first stub end is located is free to move absorbing the possible expansions and contractions. With this, if we place the expansion compensator element against the outlet of an air conditioning machine for example, the machine will not move, which makes it desirable for one side of the compensator to stay halfway through the outlet path, and locked, such that it can act as an assembly and disassembly fitting on this side, the other side being free to accommodate the expansion/contraction of the installation.

Therefore it is a very effective expansion compensator element, suitable for any type of conduits, especially those made of plastic material and which enables a dual function as a compensator and as an assembly-disassembly fitting.

### Brief description of the drawings

For the purpose of helping to make the characteristics of the invention more readily understandable, in accordance with a preferred practical exemplary embodiment thereof, said description is accompanied by a set of drawings constituting an integral part thereof which, by way of illustration and not limitation, represent the following:
Figure 1.- Shows a perspective view of the expansion compensator element, in an open position of the stub ends, for a first preferred embodiment of the invention.
Figure 2.- Shows a perspective view of the expansion compensator element, in a closed position of the stub ends, for a first preferred embodiment of the invention.

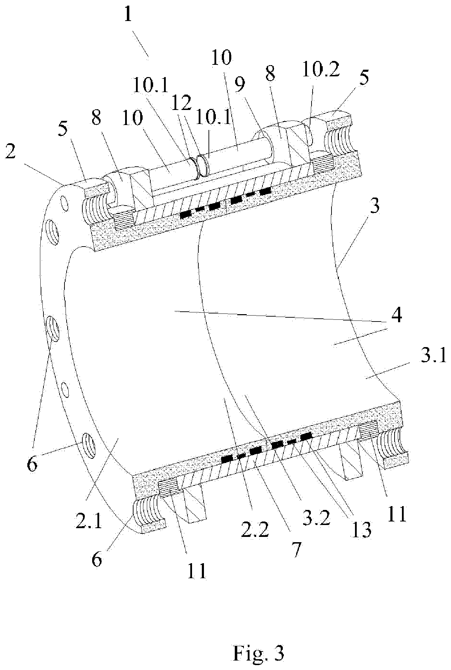

Figure 3.- Shows a cross-sectional perspective view of the expansion compensator element, for a first preferred embodiment of the invention.
Figure 4.- Shows a cross-sectional view of the expansion compensator element, for a first preferred embodiment of the invention.
Figure 5.- Shows a cross-sectional perspective view of the expansion compensator element, for a second preferred embodiment of the invention.

### Detailed description of a preferred embodiment of the invention

With reference to the figures provided, it can be seen how in a preferred embodiment of the invention, the expansion compensator element (1) for pipe elements proposed herein, comprises first and second identical stub ends (2, 3), which have a tubular body (4) with first and second opposite ends (2.1, 2.2, 3.1, 3.2) and a ring-shaped area (5) emerging from the first end (2.1, 3.1) with first through holes (6), wherein both first and second stub ends (2, 3) are arranged symmetrically with the second end (2.2, 3.2) of both facing each other.

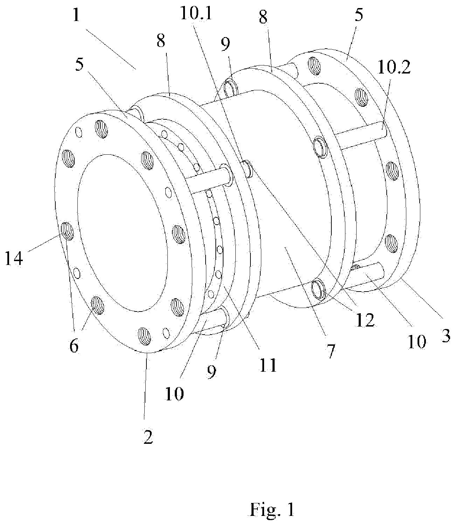

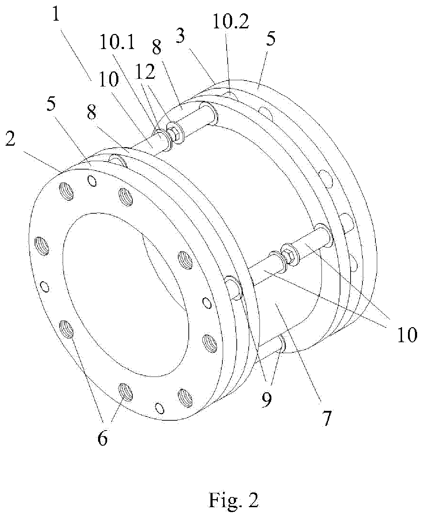

Figures 1 and 2 show that the compensator element (1) comprises a tubular jacket (7) arranged on the outer surface of at least one portion of the tubular bodies (4) of both first and second stub ends (2, 3), the inner diameter of the tubular jacket (7) being such that the tubular bodies (4) can fit tightly therein while the longitudinal movement of both stub ends with respect to the tubular jacket (7) is enabled.

To this end, the tubular jacket (4) is arranged on more of a portion of the first and second stub ends (2, 3) when said stub ends are closed in order to enable a contraction or having enabled an expansion and is arranged on less of a portion of said stub ends, if these are open, due to being prepared to enable an expansion or due to having enabled a contraction.

This expansion compensator element (1) further comprises guide means for the longitudinal movement of each first and second stub ends (2, 3) respectively, which as seen in Figures 1 and 2, have for each one of them a guide flange (8) located on the tubular jacket (7) on one end thereof, with second through holes (9), and a set of shafts (10) parallel to the shaft of both stub ends each arranged through one of the second through holes (9), with a first free end (10.1) and a second end (10.2) fixed to the ring-shaped area (5) of the corresponding stub end.

These guide flanges (8) serve to guide the shafts (10) which keep the compensator element (1) from locking due to a misalignment, while these shafts (10) enable the corresponding stub end to be guided.

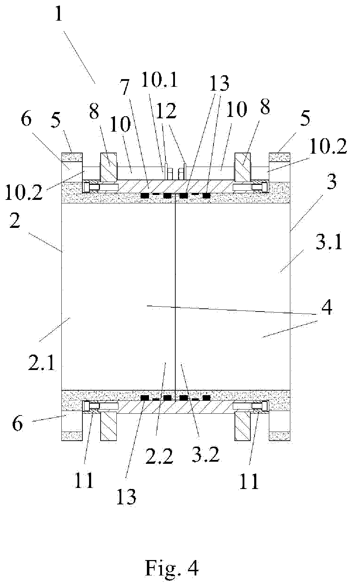

In this preferred embodiment of the invention, as shown in Figures 2 and 4, the guide means of the first and second stub ends (2, 3) comprise a counter flange (11) for each of them with an inner diameter equal to the inner diameter of the tubular jacket (7), arranged on the end thereof together with the corresponding guide flange (8).

This counter flange (11) acts as a catch, keeping the corresponding guide flange (8) from coming out of the tubular jacket (7), but it does not lock the flange, since it must be able to rotate if it needs to be oriented to correct a misalignment between flanges.

In this preferred embodiment of the invention, the shafts (10) of the guide means of the first and second stub ends (2, 3) have a stop (12) on the first end (10.1), which prevents said first end (10.1) from coming out of the second through hole (9) of the corresponding guide flange (8).

Thus, the element proposed herein acts as an expansion compensator, but in other preferred embodiments it can have a stop (12) only on the first end (10.1) of the shafts (10) of a first stub end (2), and furthermore has locking means for the shafts (10) which pass through the second holes (9) of the guide flange (8) of the second stub end (3). Thus in this premise, the compensator element (1) can operate as an expansion compensator and at the same time as an assembly and disassembly fitting.

In order to make the expansion compensator element (1) airtight, in this embodiment it comprises, as seen in Figure 4, airtight seals (13) between the tubular jacket (7) and the tubular body (4) of the first and second stub ends (2, 3).

In this preferred embodiment of the invention, the first and second stub ends (2, 3) have the ring-shaped area (5) thereof configured as a flange, with the technical characteristics corresponding to the same, and in this case, both said ring-shaped area (5) which makes up a flange, and the tubular body (4) from which it emerges, are made of metal material.

By the entire compensator element being metal, it achieves a greater installation simplicity and a smaller flange diameter which in turn enables a smaller valve diameter to be connected. Furthermore, the flange already has a DN for the part, for which reason there is no diameter-reducing effect.

Likewise, the thickness to be bridged between flanges by the screwed-in elements is smaller, for which reason these can be shorter, reducing the cost thereof. Furthermore, the pushing area achieved encompasses the entire surface of the ring-shaped area of the stub end, achieving a greater perpendicularity of the join between both of them which enables a parallelism in the pushing plane between flanges, minimising the problem of possible deformations in this joining plane.

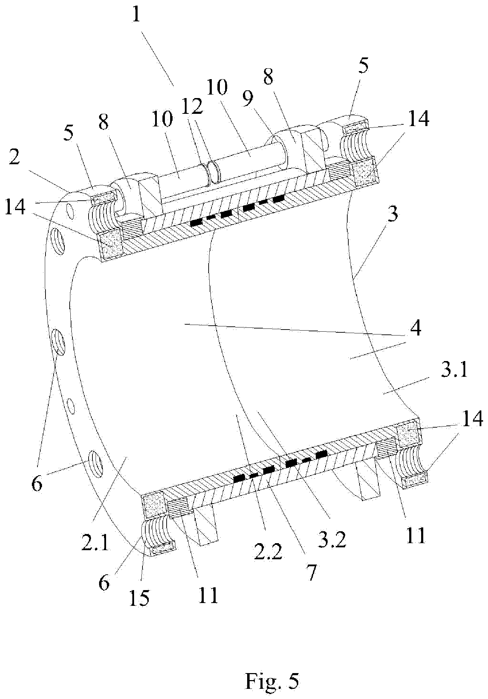

In a second preferred embodiment of the invention, shown in Figure 5, the first and second stub ends (2, 3) comprise a flange (14) with third through holes (15), embedded inside the ring-shaped area (5), and arranged such that the third through holes (15) thereof are located coinciding with the first through holes (6) of the ring-shaped area (5) of the stub end (2, 3).

The embodiment described only constitutes an example of the present invention, therefore, the specific details, terms and phrases used in the present specification must not be considered as limiting, rather they must be understood as a base for the claims and as a representative base which provides an understandable description as well as enough information for the person skilled in the art to apply the present invention.

## Claims

1. An expansion compensator element (1), for pipe elements, comprising
- first and second identical stub ends (2, 3), which have a tubular body (4) with first and second opposite ends (2.1, 2.2, 3.1, 3.2) and a ring-shaped area (5) emerging from the first end (2.1, 3.1) with first through holes (6), wherein both first and second stub ends (2, 3) are arranged symmetrically with the second end (2.2, 3.2) of both facing each other; the compensator element is **characterised in that** it further comprises
- a tubular jacket (7) arranged on the outer surface of at least one portion of the tubular bodies (4) of both first and second stub ends (2, 3), the inner diameter of the tubular jacket (7) being such that the tubular bodies (4) can fit tightly therein while the longitudinal movement of both stub ends with respect to the tubular jacket (7) is enabled, and;
- guide means for the longitudinal movement of each first and second stub ends (2, 3) respectively, which have for each one of them a guide flange (8) located on the tubular jacket (7) on one end thereof, with second through holes (9), and a set of shafts (10) parallel to the shaft of both stub ends each arranged through one of the second through holes (9), with a first free end (10.1) and a second end (10.2) fixed to the ring-shaped area (5) of the corresponding stub end.

2. The expansion compensator element (1), according to claim 1, wherein the guide means of the first and second stub ends (2, 3) comprise a counter flange (11) for each of them having an inner diameter equal to the inner diameter of the tubular jacket (7), arranged on the end thereof together with the corresponding guide flange (8).

3. The expansion compensator element (1), according to any of the preceding claims, wherein the shafts (10) of the guide means at least the first stub end (2) have a stop (12) on the first end (10.1), which prevents said first end (10.1) from coming out of the second through hole (9) of the guide flange (8).

4. The expansion compensator element (1), according to claim 3, wherein the guide flange (8) of the guide means for the second stub end (3) comprises locking means for the shafts (10) which pass through the second through holes (9) of the same in one position thereof.

5. The expansion compensator element (1), according to any of the preceding claims, which comprises airtight seals (13) between the tubular jacket (7) and the tubular body (4) of the first and second stub ends (2, 3).

6. The expansion compensator element (1), according to any of the preceding claims, wherein the first and second stub ends (2, 3) have the ring-shaped area (5) thereof configured by a metal flange, the tubular body (4) from which it emerges also being metal.

7. The expansion compensator element (1), according to any of claims 1 to 5, wherein the first and second stub ends (2, 3) comprise a flange (14) with third through holes (15), embedded inside the ring-shaped area (5), and arranged such that the third through holes (15) thereof are located coinciding with the first through holes (6) of the ring-shaped area (5) of the corresponding stub end.

## Patentansprüche

1. Dehnungsausgleichselement (1) für Rohrelemente, umfassend
- einen ersten und identischen zweiten Endstutzen (2, 3) mit einem rohrförmigen Körper (4), der ein erstes und gegenüberliegendes zweites Ende (2.1, 2.2, 3.1, 3.2) und einen aus dem ersten Ende (2.1, 3.1) austretenden ringförmigen Bereich (5) mit ersten Durchgangslöchern (6) aufweist, wobei der erste und zweite Endstutzen (2, 3) symmetrisch angeordnet sind, wobei die zweiten Enden (2.2, 3.2) der beiden einander zugewandt sind; wobei das Ausgleichselement **dadurch gekennzeichnet ist, dass** es ferner Folgendes umfasst:
- einen Rohrmantel (7), der auf der Außenfläche mindestens eines Abschnitts der rohrförmigen Körper (4) des ersten und des zweiten Endstutzens (2, 3) angeordnet ist, wobei der Innendurchmesser des Rohrmantels (7) so beschaffen ist, dass die rohrförmigen Körper (4) bei gleichzeitig möglicher Längsbewegung der beiden Endstutzen relativ zu dem Rohrmantel (7) dicht darin eingepasst sind. und;
- Führungsmittel für die Längsbewegung jeweils des ersten und zweiten Endstutzens (2, 3), umfassend je einen Führungsflansch (8) an einem Ende des Rohrmantels (7) mit zweiten Durchgangslöchern (9) und eine Reihe von jeweils durch eines der zweiten Durchgangslöcher (9) hindurchtretenden Stiften (10) parallel zum Schaft der beiden Endstutzen mit einem ersten freien Ende (10.1) und einem an dem ringförmigen Bereich (5) des entsprechenden Endstutzens befestigten zweiten Ende (10.2).

2. Dehnungsausgleichselement (1) nach Anspruch 1, wobei die Führungsmittel des ersten und zweiten Endstutzens (2, 3) jeweils einen Gegenflansch (11) mit einem Innendurchmesser gleich dem Innendurchmesser des Rohrmantels (7) umfassen, der zusammen mit dem entsprechenden Führungsflansch (8) an deren jeweiligem Ende angeordnet ist.

3. Dehnungsausgleichselement (1) nach einem der vorstehenden Ansprüche, wobei die Stifte (10) der Führungsmittel zumindest des ersten Endstutzens (2) am ersten Ende (10.1) einen Anschlag (12) aufweisen, der das Austreten des genannten ersten Endes (10.1) aus dem zweiten Durchgangsloch (9) des Führungsflansches (8) verhindert.

4. Dehnungsausgleichselement (1) nach Anspruch 3, wobei der Führungsflansch (8) der Führungsmittel des zweiten Endstutzens (3) Verriegelungsmittel für die in einer bestimmten Stellung desselben durch dessen zweite Durchgangslöcher (9) hindurchtretenden Stifte (10) aufweist.

5. Dehnungsausgleichselement (1) nach einem der vorstehenden Ansprüche, umfassend luftdichte Abdichtungen (13) zwischen dem Rohrmantel (7) und dem rohrförmigen Körper (4) des ersten und zweiten Endstutzens (2, 3).

6. Dehnungsausgleichselement (1) nach einem der vorstehenden Ansprüche, bei dem der ringförmige Bereich (5) des ersten und zweiten Endstutzens (2, 3) als Metallflansch ausgebildet ist und der rohrförmige Körper (4), aus dem er austritt, ebenfalls aus Metall besteht.

7. Dehnungsausgleichselement (1) nach einem der Ansprüche 1 bis 5, wobei der erste und zweite Endstutzen (2, 3) einen in den ringförmigen Bereich (5) eingebetteten Flansch (14) mit dritten Durchgangslöchern (15) aufweisen, der so angeordnet ist, dass dessen dritte Durchgangslöcher (15) mit den ersten Durchgangslöchern (6) des ringförmigen Bereichs (5) des entsprechenden Endstutzens fluchten.

## Revendications

1. Un élément compensateur de dilatation (1), pour des éléments de tuyaux, comprenant
- des première et seconde extrémités identiques (2, 3), qui ont un corps tubulaire (4) avec des première et seconde extrémités opposées (2.1, 2.2, 3.1, 3.2) et une zone annulaire (5) émergeant de la première extrémité (2.1, 3.1) avec des premiers trous traversants (6), dans lequel les première et seconde extrémités (2, 3) sont disposées symétriquement avec la seconde extrémité (2.2, 3.2) des deux en regard l'une de l'autre ; l'élément compensateur est **caractérisé en ce qu'**il comprend en outre
- une chemise tubulaire (7) disposée sur la surface extérieure d'au moins une partie des corps tubulaires (4) des deux premières et deuxièmes extrémités tronquées (2, 3), le diamètre intérieur de la chemise tubulaire (7) étant tel que les corps tubulaires (4) peuvent s'y ajuster de manière serrée tandis que le mouvement longitudinal des deux extrémités tronquées par rapport à la chemise tubulaire (7) est autorisé, et ;
- des moyens de guidage pour le mouvement longitudinal de chacune des première et seconde extrémités d'embout (2, 3) respectivement, qui ont pour chacune d'entre elles une bride de guidage (8) située sur l'enveloppe tubulaire (7) à une extrémité de celle-ci, avec des seconds trous traversants (9), et un ensemble d'arbres (10) parallèles à l'arbre des deux extrémités d'embout, chacun étant disposé à travers l'un des seconds trous traversants (9), avec une première extrémité libre (10.1) et une seconde extrémité (10.2) fixée à la zone annulaire (5) de l'extrémité d'embout correspondante.

2. Élément compensateur de dilatation (1), selon la revendication 1, dans lequel les moyens de guidage des première et seconde extrémités d'embout (2, 3) comprennent une contre-bride (11) pour chacune d'entre elles ayant un diamètre intérieur égal au diamètre intérieur de l'enveloppe tubulaire (7), agencée sur l'extrémité de celle-ci conjointement avec la bride de guidage correspondante (8).

3. Élément compensateur de dilatation (1), selon l'une quelconque des revendications précédentes, dans lequel les arbres (10) des moyens de guidage, au moins la première extrémité tronquée (2), comportent une butée (12) sur la première extrémité (10.1), qui empêche ladite première extrémité (10.1) de sortir du second trou traversant (9) de la bride de guidage (8).

4. Élément compensateur de dilatation (1), selon la revendication 3, dans lequel la bride de guidage (8) du moyen de guidage pour le second embout (3) comprend des moyens de verrouillage pour les arbres (10) qui passent à travers les seconds trous traversants (9) de celui-ci dans une position de celui-ci.

5. Élément compensateur de dilatation (1), selon l'une quelconque des revendications précédentes, qui comprend des joints étanches à l'air (13) entre l'enveloppe tubulaire (7) et le corps tubulaire (4) des premier et second embouts (2, 3).

6. Élément compensateur de dilatation (1), selon l'une quelconque des revendications précédentes, dans lequel la première et la deuxième extrémités tronquées (2, 3) ont leur zone annulaire (5) configurée par une bride métallique, le corps tubulaire (4) duquel elle émerge étant également métallique.

7. Élément compensateur de dilatation (1), selon l'une quelconque des revendications 1 à 5, dans lequel la première et la deuxième extrémité de tronçon (2, 3) comprennent une bride (14) avec des troisièmes trous traversants (15), encastrés à l'intérieur de la zone annulaire (5), et disposés de telle sorte que leurs troisièmes trous traversants (15) sont situés en coïncidence avec les premiers trous traversants (6) de la zone annulaire (5) de l'extrémité de tronçon correspondante.
